**Europäisches Patentamt**

(19) **European Patent Office**

**Office européen des brevets**

(11) Publication number : **0 368 412 B1**

(12) # EUROPEAN PATENT SPECIFICATION

(45) Date of publication of patent specification :
03.03.93 Bulletin 93/09

(51) Int. Cl.$^5$ : **B29B 15/12,** B29C 67/14, C08J 5/24, C08J 5/12

(21) Application number : **89202805.1**

(22) Date of filing : **07.11.89**

(54) Method for the production of flexible, polymer-impregnated reinforcing materials, the polymer-impregnated reinforcing materials produced and shaped articles produced on the basis of these reinforcing materials.

(30) Priority : **10.11.88 NL 8802768**

(43) Date of publication of application :
**16.05.90 Bulletin 90/20**

(45) Publication of the grant of the patent :
**03.03.93 Bulletin 93/09**

(84) Designated Contracting States :
**AT BE CH DE ES FR GB GR IT LI NL SE**

(56) References cited :
**EP-A- 0 041 849**
**EP-A- 0 146 504**
**EP-A- 0 222 399**
**EP-A- 0 278 362**

(56) References cited :
**FR-A- 2 600 585**
**GB-A- 2 168 361**
**US-A- 3 897 533**
**US-A- 4 292 105**

(73) Proprietor : **DSM N.V.**
**Het Overloon 1**
**NL-6411 TE Heerlen (NL)**

(72) Inventor : **Verheus, Aldert Simon**
**Hendrik Tollenstraat 152**
**NL-2624 BK Delft (NL)**
Inventor : **Mercx, Franciscus Petrus Maria**
**Waterblok 21**
**NL-2612 KW Delft (NL)**
Inventor : **van Turnhout, Jan**
**Park Berkenoord 1**
**NL-2641 CW Pijnacker (NL)**

## Description

The invention relates to a method for the production of a composite material by impregnating a fibrous reinforcing material with a pulverulent matrix polymer.

For numerous applications, composite materials, for example consisting of a reinforcing fibre and a polymer matrix, have advantages over homogeneous materials, such as a high strength and a high rigidity coupled with a low weight. Composite materials, which are obtained, for example, by impregnating a reinforcing fibre with a polymer, can serve as a semi-finished product (so-called "prepreg") for the production of shaped articles. Composite materials based on thermosetting plastics are relatively easy to produce because thermosetting compounds, by virtue of their low viscosity in the processing phase, are very suitable for the impregnation of fibres. However, thermoplastic compounds offer various advantages over thermosetting compounds for the production of composite materials, such as a greater impact resistance, a high elongation at break, a more rapid cleaner and more environmentally friendly processing, a better deformability and reprocessibility and also a virtually unlimited stability of the semi-finished product impregnated with thermoplastic.

The following methods are known for the production of thermoplastic prepregs reinforced with fibres:

1) Via polymer melts; the disadvantage of this method is that because of the high viscosity of the melt it is not reasonably possible to effect a good impregnation into the core of the fibre bundle by this means; the fibre bundles (rovings) treated in this way are, moreover, fairly stiff, which is a disadvantage for the further processing and even renders certain types of processing, such as weaving and knitting, impossible.

2) Via polymer solutions; after removal of the solvent, a stiff prepreg, which thus has poor processibility, is obtained with this method also; another disadvantage of this method is that many thermoplastics are soluble only in solvents which are harmful to man and the environment, so that a laborious working-up method is required for these solvents.

3) Via joint spinning of reinforcing fibre and polymer ("co-mingled roving"); a great drawback of this method is that not all thermoplastics can be spun to filament yarns; furthermore, this method requires an extra process step (spinning), which increases costs, and the processing of the rovings to the composite material also presents problems.

4) Via layered pressing ("film stacking"); this method can be used only on unidirectional fibre layers, wovens or non-wovens but not on rovings; moreover, this does not provide a real impregnation and the product is stiff and thus difficult to process further.

5) The production of composite materials by impregnating continuous reinforcing materials with polymer powders is also known, but is not, or hardly, used industrially. The most important reason is that there is still no suitable method for applying the powder permanently to the fibre. Consequently a loss of polymer powder occurs on storage and during further processing with, as a result, a poor impregnation and a poor reproducibility. A solution to this urgent problem is proposed in FR-A-2,562,467 in the form of the so-called FIT material (Fibre Imprégnée Thermoplastique) (Thermoplastic Impregnated Fibre)) (R.A. Ganga, Composites (5) 1986, pp. 79-81, D. Brownhill, Modern Plastics Intern., March 1985, pp. 30-33) and consists in extruding a polymer casing about the fibres impregnated with powder. Disadvantages of this method are, however, the extra (cost-raising) process step required, the low degree of compactness of the product and the fact that the proportion of the casing in the total amount of thermoplastic applied is undesirably high for most applications.

From European Patent Application 13,244 it is known to produce a composite material consisting of a fibre material and a synthetic resin by impregnating the fibre material with a dispersion of a pulverulent resin in water which has been thickened with, for example, polyethylene glycol and hydroxyethylcellulose, and, after impregnation, heating the dried material so that the resin melts and the continuous phase forms. In addition, it is known from German Auslegeschrift 1,619,197 to produce a thermoplastic material reinforced with glass fibre by incorporating an organic solvent in the impregnating bath, which contains an aqueous emulsion of the polymer. According to European Patent Application 93,748 (WO 83/01755), profiles of composite materials can be produced by impregnating the reinforcing fibres with resin particles by means of mechanical force, removing the excess resin particles and melting the resin. With this method, however, a fairly stiff fibre results because of the direct melting-on of the polymer. According to British Patent Application 2,168,361, polymer materials reinforced with fibres can be produced by impregnating the fibres with a dispersion of polymer particles of less than 5 $\mu$m, partially removing the dispersant and drying.

These and other known methods have various disadvantages, such as the necessary use of additives which are expensive, difficult to remove, toxic or objectionable for other reasons, a high processing temperature, a limited processibility, a low flexibility and/or a limited stability of the impregnated products obtained.

It has now been found that polymer powders can be permanently applied to reinforcing materials with the aid of a film-forming polymer which is added via the impregnating bath or directly to the reinforcing material which is to be impregnated or has been impregnated.

The characterizing feature of the method according to the invention consists, therefore, in treating the fibrous reinforcing material, before, during or after impregnation with the pulverulent matrix polymer, with at least one film-forming polymer and drying the material which has been impregnated and treated with the film-forming polymer at a temperature above the film-forming temperature of the film-forming polymer and below the temperature at which the pulverulent polymer melts or cures.

The implementation of the method according to the invention is simple from the standpoint of process engineering and, because the cost price of the requisite constituents is relatively low, is also economically attractive. The film-forming polymer forms a very thin film around the matrix material, as a result of which no particular requirements with regard to particle size and the like are demanded of the matrix powder. By this means flexible, impregnated continuous reinforcing materials are obtained which are durable, have excellent mechanical properties and can be processed to diverse shaped articles.

The composite materials ("prepregs") obtained using the method according to the invention also has the following significant advantages over the materials according to the prior art:
- a high flexibility and thus a broad applicability;
- a high compactness, as a result of which storage and transport are less expensive;
- a complete encapsulation of the matrix particles and the reinforcing fibre, as a result of which no air is occluded during further processing.

Reinforcing materials which can be used are, in general, all known long organic and inorganic reinforcing fibres, such as glass fibres, carbon fibres, polyamide fibres, in particular aramide fibres, ceramic fibres, metal fibres (for example in order to achieve electromagnetic screening) and further combinations of reinforcing fibres, so-called hybrid fibres. For a better impregnation it is desirable that the fibres are spreadable; this can be achieved in a generally known manner using mechanical means.

Polymers which can be used as a film-forming polymer in the method according to the invention are all thermoplastic polymers which form a polymer film in the presence of a suspending agent, usually water. The film-forming polymers preferably do not crosslink or crosslink to only a slight extent. Film-forming polymers of this type are customarily used in the form of so-called film-forming dispersions. In this context a film-forming dispersion is understood to be any dispersion or suspension of thermoplastic film-forming polymers. Film-forming dispersions are described by F. Hölscher and H. Reinhard in "Dispersionen synthetischer Hochpolymerer" ("Dispersions of synthetic high polymers"), Vol. I and II, K.A. Wolf, Springer Verlag, 1969. The dispersion usually has a low viscosity, which leads to a good penetration of the film former and thus to a good encapsulation. The film-forming dispersion is preferably used as such, for example in the form of a commercially available dispersion. The dispersion or suspension can, however, also be prepared in the process itself from a film-forming polymer as such. The dispersing agent in the film-forming dispersion is preferably essentially water. The dispersion can contain customary auxiliaries, such as plasticizers, auxiliary solvents and the like. Various thermoplastic polymers and dispersions thereof, such as polyurethane dispersions, can be used. If a low water absorption in the reinforced fibre is desired, a polyvinylidene chloride dispersion can be useful. Copolymers, for example of acrylate and styrene, can also be used. Combinations of film-forming polymers (dispersions) are also satisfactory. The particle size of the film-forming polymer is of the order of 0.01-5 $\mu$m. Preferably, the particle size of the film former is smaller than or equal to that of the pulverulent matrix polymer.

The film formed from the film-forming polymer has a relatively high elongation at break because the prepreg obtained has the desired flexibility and processibility (windability, drapability and the like). At room temperature the elongation at break is preferably at least 15 % and in particular at least 50 %. Preferably, the film formed from the film-forming polymer has a decomposition temperature which is equal to or higher than the melting point or curing temperature of the pulverulent matrix polymer. The film is preferably flexible, non-adhesive, not crosslinked, resistant to wear, resistant to aging, absorbs little or no moisture and is to some extent permeable to moisture (microporous). The film can have a small thickness, preferably approximately 1 $\mu$m.

The pulverulent polymer with which the reinforcing material is impregnated to form a polymer matrix can be any type of polymer, the choice depending on the intended purpose. Both thermoplastic and thermosetting polymers can be used. The method according to the invention is particularly useful for thermoplastic polymers, such as polypropene, polyethene, polyamide-6, polyamide-4,6, polyamide-6,6, polyamide-11 and the like and so-called high engineering plastics, such as polyether-imide and polyethersulfone, because, as already explained, no attractive alternatives are available for these. The method according to the invention also offers advantages for thermosetting plastic matrices, such as polyesters and epoxy resins, because the process is then cleaner and safer (no monomer emission). It can also be of advantage to use mixtures of polymers or combinations of thermoplastic and thermosetting polymers as impregnating powder. The powders obtainable commercially can in general be used directly. The particle size is not critical, although smaller grains are easier to process in some cases. If necessary, the powder is ground before use. Powders with a particle size of less

than 200 μm are preferred.

The ratio between the amounts of matrix polymer and film-forming polymer used can vary, depending on the circumstances. An amount of film former of 5 % relative to the matrix polymer already gives good results. In general, an amount such that the ratio in the prepreg is as low as possible is used.

The impregnation of the reinforcing material can take place in a liquid bath or in a fluidized bed. The treatment with the film-forming dispersion can be effected at the same time as the impregnation, but also beforehand or afterwards.

For a simple and economic process operation it is preferable with the method according to the invention to add the film-forming dispersion to the impregnating bath, so that the impregnation with matrix polymer powder and the treatment with film-forming polymer take place in one step. An attendant advantage of this preferred embodiment is that diverse polymer powders which otherwise are difficult to suspend in water or cannot be suspended in water, such as polyalkene powders, are also frequently more readily suspendible in water as a result of the presence of the film-forming dispersion. If a pulverulent thermoplastic is still insufficiently suspendible, a dispersing auxiliary, such as an alcohol or a soap, can then be added to the bath.

In accordance with another embodiment, the impregnation is carried out in a bed of matrix polymer particles fluidized by means of a stream of gas and the impregnated fibres are then treated with the film-forming polymer, for example by passing the fibres along a roll ("kiss roll") rotating through a film-forming dispersion.

According to another embodiment, both the impregnation with the matrix polymer powder and the treatment with the film former are carried out in a fluidized bed. The film forming can then be effected by passing the impregnated fibres along a "kiss roll" with water or by treating them with steam.

In accordance with another embodiment, the impregnation with the matrix polymer powder and the treatment with the film-forming dispersion are carried out in two different fluid baths; with this procedure the fibre can be treated in a first bath with the film-forming dispersion and in a subsequent bath with the matrix polymer powder which, if necessary, is pressed between the fibres by means of mechanical forces; the fibres can also be first passed through an impregnating bath and then through a bath containing the film-forming dispersion.

Substances which improve the characteristics and the processibility of the product, such as adhesion improvers, colorants, antioxidants and the like, can be added to the composite materials during the impregnation process, for example via the impregnating bath. The impregnating bath can also contain anti-foams, pH regulators, cosolvents and the like. Incidentally, the addition of the film-forming dispersion can already have an anti-oxidant action, as in the case of polyurethanes, so that products with a higher resistance to oxidation are obtained. Further, fillers can be added to the dispersion, to a volume percentage of at least 15%, like kaolin, gypsum, short glass- or stonefibers with a length of shorter than 2 mm or any other mineral material like for example wollastonite.

The drying of the treated, impregnated fibres can be effected at room temperature or preferably at elevated temperatures; however, the drying temperature is lower than the melting point of the thermoplastic matrix polymer or than the curing temperature of the thermosetting matrix polymer.

The method according to the invention can not only be used for fibres but also for so-called unidirectional fibre tapes (fibres with transverse fibres) and other continuous (woven, knits) and non-continuous (non-wovens) reinforcing materials.

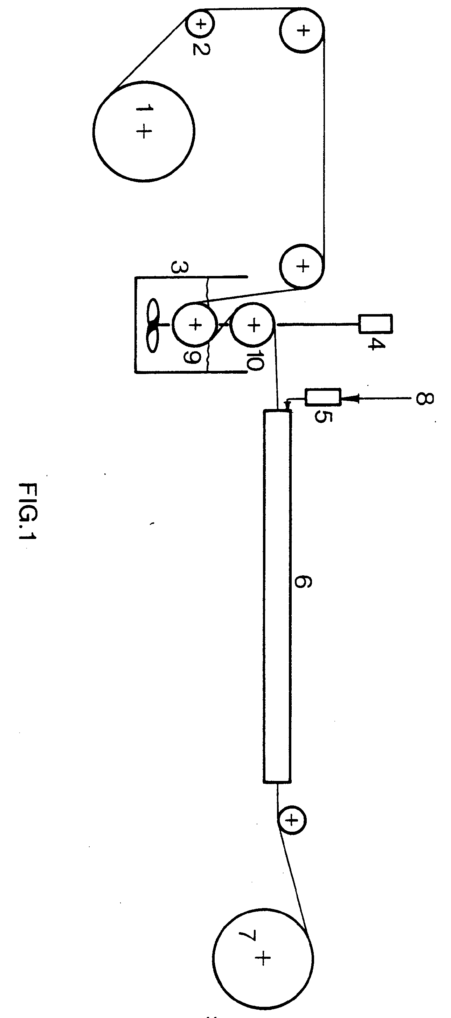

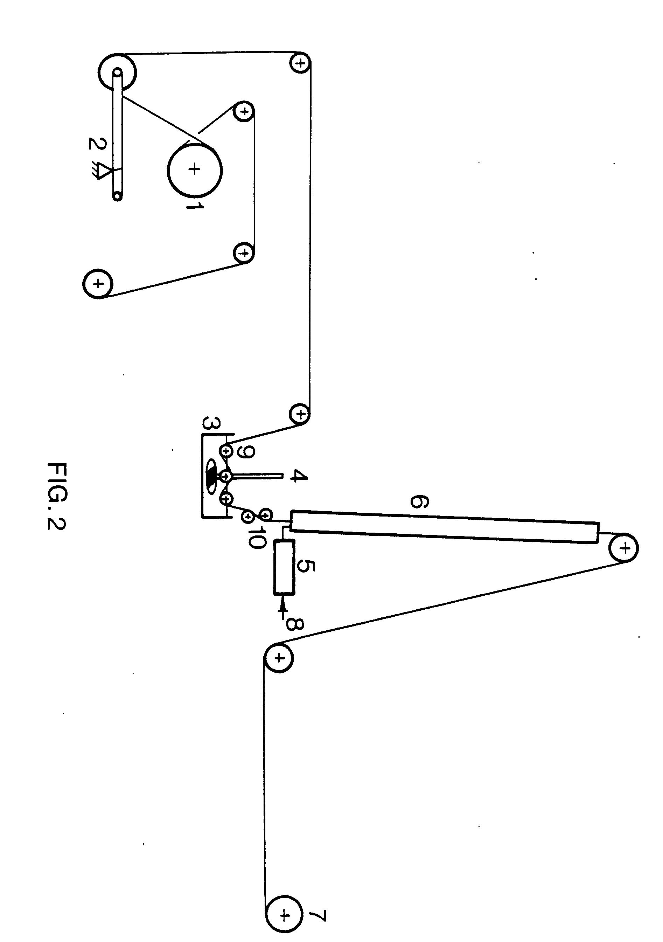

The method according to the invention can, for example, be carried out in an installation such as is shown schematically in Fig. 1. In this installation, the fibrous reinforcing material is fed from a feed roll 1 via a fibre tensioning regulator 2, which regulates the spreading of the fibre and thus the impregnability, into the impregnating bath 3 in which, according to this embodiment, the polymer powder and the film-forming dispersion are located. The impregnating mixture is stirred using stirring device 4 and the bath level is preferably above half of the bottom most roll 9. The impregnated material is fed via roll 10, which if necessary serves as a stripping roll, into drying tube 6, in which air or another gas warmed by means of warming device 5 is passed. The dried prepreg is fed to take-up roll 7. A variant of this installation is illustrated in Figure 2. For better impregnation there are three rolls 9 in the bath, after which the impregnated material is stripped along fixed stripper pins 10. The product is directly ready for further processing, but can also be stored for a prolonged period without any problems.

The invention also relates to a composite material consisting of a fibrous reinforcing material, a pulverulent polymer and film-forming polymer, the reinforcing material and the pulverulent polymer being encapsulated in the film-forming polymer. Composite material of this type can be produced by the method described above. These impregnated reinforcing materials (prepregs) have a high strength and a good rigidity in the fibre direction, coupled with a high stability. These composite materials can be used for the production of shaped articles by means of winding, pressing, pultrusion and the like. By virtue of the good flexibility, the composite material according to the invention can be used for specific types of processing, such as weaving, knitting, braiding and the like. These fabric structures can be shaped into final shaped articles, inter alia by hot pressing. They can also be cut and then pressed to shaped articles. The invention also relates to the shaped articles produced in this way.

Example 1

In an installation as shown in Figure 1, a continuous class fibre bundle (Silenka 010-P75, 300 tex, mean filament diameter 16 @m, density 2.54 g/cm³) was impregnated with polypropene powder (HY 6100, Shell, mean particle size 60 @m, density 0.90 g/cm³) or polyethene powder (HDPE, NB 6454F, Plate Nederland BV, mean particle size 50 @m, density 0.96 g/cm³). The impregnating bath also contained a polyurethane dispersion (Neorez R 970, Polyvinyl Chemie/ICI, aqueous dispersion, solids content 39 % by weight, density 1.04 g/cm³, minimum film-forming temperature < 0°C). The composition of the impregnating baths, expressed in percentages by weight, is given in Table A.

TABLE A

| Constituents | Impregnating bath | | |
|---|---|---|---|
| | A | B | C |
| PP* | 18.4 | 17.1 | |
| PE** | | | 16.4 |
| Water | 73.8 | 68.6 | 77.7 |
| Neorez R970 | 7.8 | 14.3 | 5.9 |

\*      PP = polypropene powder

\*\*     PE = polyethene powder

After passing through the impregnating bath, the impregnated glass fibres were dried in a drying tube (length 150 cm, internal diameter 2 cm), through which 5.5 litres of air at a temperature of 150°C were blown per minute.

The process speed was 2.8 m/min in the case of the impregnating step with polypropene powder, while a process speed of 1.9 m/min was maintained in the case of the impregnating step with polyethene powder.

The prepregs produced in the above manner (moisture content: a few percent) were subjected to post-drying at 50°C in vacuo until the weight of the prepreg was constant, before the matrix content was determined.

The effect of fibre tension and/or impregnating bath composition on the percentage by volume of thermoplastic matrix in the prepregs is shown in Table B.

TABLE B

| Impregnating bath | Fibre tension (MPa) | % by volume matrix |
|---|---|---|
| A | 12.1 | 43 |
| B | 12.1 | 46 |
| C | 12.1 | 34 |
| C | 6.9 | 50 |

The polypropene or polyethene powder is homogeneously distributed over and in the glass fibres of the prepreg material thus produced. Moreover, the polypropene or polyethene powder is fixed on the glass fibres

5

by the film-forming dispersion.

The process conditions given in this example are not critical.

Example II

In an installation as shown in Figure 2, a continuous glass fibre bundle (Silenka 010-P75, see Example I) was impregnated with polypropene powder (KY 6100, see Example I). The impregnating bath also contained a polyurethane dispersion (Neorez R970, see Example I). The composition of the impregnating baths, expressed in percentages by weight, is shown in Table C.

TABLE C

| Constituents | Impregnating bath | | | |
|---|---|---|---|---|
| | A | B | C | D |
| PP* | 21.8 | 21.5 | 21.2 | 21.0 |
| Water | 72.5 | 71.7 | 70.8 | 70.0 |
| Neorex R970 | 5.7 | 6.8 | 8.0 | 9.0 |

\*       PP = polypropene

The level in the impregnating bath was adjusted such that the guide rolls were approximately half submerged under the fluid level. After passing through the impregnating bath, the impregnated glass fibres were passed over two fixed, non-rotating, stripper rolls. The impregnated glass fibres were then dried in a drying tube (length 150 cm, internal diameter 2 cm), through which 5.5 litres of air at a temperature of 150°C were blown per minute. The process speed was 1.9 m/min.

The prepregs produced in the above manner (moisture content: a few per cent) were post-dried at 50°C in vacuo until the weight of the prepreg was constant, before the matrix content was determined.

The effect of fibre tension and/or impregnating bath composition on the percentage by volume of thermoplastic matrix in the prepregs is shown in Table D.

TABLE D

| Impregnating bath | Fibre tension (MPa) | % by vol matrix |
|---|---|---|
| A | 6.9 | 68 |
| 21.7 | 56 | |
| B | 6.9 | 68 |
| 21.7 | 57 | |
| C | 6.9 | 70 |
| | 21.7 | 60 |
| D | 6.9 | 72 |
| | 21.7 | 61 |

The polypropylene powder is homogeneously distributed over and in the glass fibres of the prepreg material. Moreover, the polypropylene powder is fixed on the glass fibres by the film-forming dispersion.

The process conditions given in this example are again not critical.

## Example III

In an installation as shown in Figure 2, a continuous glass fibre bundle (Silenka 010-P75, see Example I) was impregnated with polyamide (copolymer) powder (H105, PA80, Plate Nederland BV, mean particle size 45 @m, density 1.10 g/cm$^3$). The impregnating baths also contained a styrene/acrylate copolymer dispersion (Acronal 290D, BASF, aqueous dispersion, solids contents 50% by weight, density 1.04 g/cm$^3$, minimum film-forming temperature 20°C). The composition of the impregnating bath, expressed in percentages by weight, is shown in Table E.

## TABLE E

| Constituents | Impregnating bath |
|---|---|
| PA* | 21.7 |
| water | 72.3 |
| Acronal 290D | 6.0 |

*polyamide powder

The level in the impregnating bath was adjusted such that the guide rolls were approximately half submerged beneath the fluid level. The fibre tension was 21.7 MPa. After passing through the impregnating bath, the impregnated glass fibres were passed over two fixed, non-rotating stripper rolls. The impregnated glass fibres were then dried in a drying tube (length 150 cm, internal diameter 2 cm), through which 5.5 litres of air at a temperature 150°C were blown per minute). The process speed was 1.9 m/min.

The prepregs produced in the above manner (moisture content: a few per cent) were post-dried at 50°C in vacuo until the weight of the prepreg was constant, before the matrix content was determined.

The matrix content in the prepreg, expressed in per cent by volume, was 57%. The polyamide powder is homogeneously distributed over and in the glass fibres of the prepreg materials. Moreover, the polyamide powder is fixed on the glass fibres by the film-forming dispersion.

The process conditions given in this example are again not critical.

## Comparison example:

Examples I, II and III were repeated but without the addition of the film-forming dispersion (Neorez R970 or Acronal 290D) to the impregnating bath. A fairly large, non-reproducible loss of powder now occurred during the further processing of the impregnated glass fibre bundle after passing through the impregnating bath. As a result of this it is impossible to give reproducible/relevant data with regard to the matrix content for these prepregs.

## Claims

1. Method for the production of a composite material by impregnating a fibrous reinforcing material with a pulverulent matrix polymer, characterized in that the reinforcing material is treated, before, during or after impregnation with the pulverulent matrix polymer, with at least one film-forming polymer and the material which has been impregnated and treated with the film-forming polymer is dried at a temperature above the film-forming temperature of the film-forming polymer and below the temperature at which the pulverulent polymer melts or cures.

2. Method according to Claim 1, characterized in that the film-forming polymer is used in the form of a film-forming dispersion of the film-forming polymer.

3. Method according to Claim 2, characterized in that the dispersant in the film-forming dispersion is essentially water.

4. Method according to any one of Claims 1-3, characterized in that the impregnation and treatment with the film-forming polymer are carried out simultaneously in a bath containing the matrix polymer and the film-forming polymer.

5. Method according to any one of Claims 1-4, characterized in that the impregnation is carried out in a fluidized bed and the impregnated material is treated with the film-forming polymer.

6. Method according to any one of Claims 1-5, characterized in that the film-forming polymer does not crosslink or crosslinks to only a slight extent.

7. Method according to any one of Claims 1-6, characterized in that the film-forming polymer gives a film which at room temperature has an elongation at break of at least 15%.

8. Method according to any one of Claims 1-7, characterized in that the film-forming polymer gives a film for which the decomposition temperature is higher than the melting point of the pulverulent matrix polymer.

9. Method according to any one of Claims 1-8, characterized in that the film-forming polymer has a mean particle size which is smaller than the mean particle size of the pulverulent matrix polymer.

10. Method according to any one of Claims 1-9, characterized in that the pulverulent matrix polymer is thermoplastic.

11. Composite material consisting of a fibrous reinforcing material, a pulverulent polymer and a film-forming polymer, the reinforcing material and the pulverulent polymer being encapsulated in the film-forming polymer, which composite material can be obtained by using the method according to any one of Claims 1-10.

12. Articles obtained by processing the composite material according to Claim 11.

## Patentansprüche

1. Verfahren zur Herstellung eines Verbundmaterials durch Imprägnieren eines faserigen Verstärkungsmaterials mit einem pulverartigen Matrixpolymer, dadurch gekennzeichnet, daß das Verstärkungsmaterial vor, während oder nach der Imprägnierung mit dem pulverartigen Matrixpolymer mit zumindest einem filmbildenden Polymer behandelt wird, und daß das Material, welches imprägniert und mit dem filmbildenden Polymer behandelt worden ist, bei einer Temperatur über der filmbildenden Temperatur des filmbildenden Polymers und unter der Temperatur, bei der das feinpulverige Polymer schmilzt oder aushärtet, getrocknet wird.

2. Verfahren nach Anspruch 1, dadurch gekennzeichnet, daß das filmbildende Polymer in der Form einer filmbildenden Dispersion des filmbildenden Polymers verwendet wird.

3. Verfahren nach Anspruch 2, dadurch gekennzeichnet, daß das Dispersionsmittel in der filmbildenden Dispersion im wesentlichen Wasser ist.

4. Verfahren nach irgendeinem der Ansprüche 1-3, dadurch gekennzeichnet, daß die Imprägnierung und die Behandlung mit dem filmbildenden Polymer gleichzeitig in einem Bad ausgeführt werden, welches das Matrixpolymer und das filmbildende Polymer enthält.

5. Verfahren nach irgendeinem der Ansprüche 1-4, dadurch gekennzeichnet, daß die Imprägnierung in einem Fließbett ausgeführt wird, und daß das imprägnierte Material mit dem filmbildenden Polymer behandelt wird.

6. Verfahren nach irgendeinem der Ansprüche 1-5, dadurch gekennzeichnet, daß das filmbildende Polymer nicht vernetzt oder nur in einem geringen Ausmaß vernetzt.

7. Verfahren nach irgendeinem der Ansprüche 1-6, dadurch gekennzeichnet, daß das filmbildende Polymer einen Film ergibt, welcher bei Raumtemperatur eine Bruchdehnung von mindestens 15 % besitzt.

8. Verfahren nach irgendeinem der Ansprüche 1-7, dadurch gekennzeichnet, daß das filmbildende Polymer einen Film ergibt, für welchen die Zersetzungstemperatur höher ist als der Schmelzpunkt des pulverartigen Matrixpolymers.

9. Verfahren nach irgendeinem der Ansprüche 1-8, dadurch gekennzeichnet, daß das filmbildende Polymer eine mittlere Teilchengröße besitzt, die kleiner ist als die mittlere Teilchengröße des pulverartigen Matrixpolymers.

10. Verfahren nach irgendeinem der Ansprüche 1-9, dadurch gekennzeichnet, daß das pulverartige Matrixpolymer thermoplastisch ist.

11. Verbundmaterial, bestehend aus einem faserigen Verstärkungsmaterial, einem pulverartigen Polymer und einem filmbildenden Polymer, bei dem das Verstärkungsmaterial und das pulverartige Polymer in das filmbildende Polymer eingekapselt sind, welches Verbundmaterial unter Verwendung des Verfahrens gemäß irgendeinem der Ansprüche 1-10 erhalten werden kann.

12. Gegenstände, erhalten durch Verarbeiten des Verbundmaterials gemäß Anspruch 11.

## Revendications

1. Procédé de production d'une matière composite par imprégnation d'une matière fibreuse de renforcement avec un polymère de matrice pulvérulent, caractérisé en ce qu'on traite la matière de renforcement avant, pendant ou après l'imprégnation avec le polymère de matrice pulvérulent, avec au moins un polymère filmogène, et on sèche la matière imprégnée et traitée par la polymère filmogène à une température supérieure à la température filmogène du polymère filmogène et inférieure à la température à laquelle le polymère pulvérulent fond ou durcit.

2. Procédé selon la revendication 1,
caractérisé en ce qu'on utilise le polymère filmogène sous forme d'une dispersion filmogène du polymère filmogène.

3. Procédé selon la revendication 2,
caractérisé en ce que le dispersant dans la dispersion filmogène est essentiellement de l'eau.

4. Procédé selon l'une quelconque des revendications 1 à 3, caractérisé en ce que l'on effectue simultanément l'imprégnation et le traitement par le polymère filmogène dans un bain qui contient le polymère de matrice et le polymère filmogène.

5. Procédé selon l'une quelconque des revendications 1 à 4, caractérisé en ce qu'on effectue l'imprégnation dans un lit fluidisé et on traite la matière imprégnée par le polymère filmogène.

6. Procédé selon l'une quelconque des revendications 1 à 5, caractérisé en ce que le polymère filmogène ne réticule pas ou ne réticule qu'à un faible degré.

7. Procédé selon l'une quelconque des revendications 1 à 6, caractérisé en ce que le polymère filmogène donne une pellicule qui, à la température ambiante, présente un allongement à la rupture d'au moins 15%.

8. Procédé selon l'une quelconque des revendications 1 à 7, caractérisé en ce que le polymère filmogène donne une pellicule dont la température de décomposition est supérieure au point de fusion du polymère de matrice pulvérulent.

9. Procédé selon l'une quelconque des revendications 1 à 8, caractérisé en ce que le polymère filmogène présente une granulométrie moyenne inférieure à la granulométrie moyenne du polymère de matrice pulvérulent.

10. Procédé selon l'une quelconque des revendications 1 à 9, caractérisé en ce que le polymère de matrice pulvérulent est thermoplastique.

11. Matière composite comprenant une matière fibreuse de renforcement, un polymère pulvérulent et un polymère filmogène, la matière de renforcement et le polymère pulvérulent étant enrobés dans le polymère filmogène, ledit matière composite pouvant être obtenu par la mise en oeuvre du procédé selon l'une quelconque des revendications 1 à 10.

12. Articles obtenus par traitement de la matière composite selon la revendication 11.

FIG.1

FIG. 2